# EUROPÄISCHE PATENTSCHRIFT

(11) **EP 1 441 157 B1**
(45) Veröffentlichungstag und Bekanntmachung des Hinweises auf die Patenterteilung: **28.09.2005**
(21) Anmeldenummer: 04001267.6
(22) Anmeldetag: 21.01.2004
(51) Int. Cl.: F16J 10/04, F02F 1/20, C25D 5/18

(54) **Zylinderoberfläche**
Cylinder surface
Surface de cylindre

(30) Priorität: 21.01.2003 DE 10302107
(43) Veröffentlichungstag der Anmeldung: 28.07.2004
(73) Patentinhaber: Fuchs Technology AG, 8555 Müllheim (CH)
(72) Erfinder: Fuchs, Gerhard, 8555 Müllheim (CH); Müll, Karl, 8555 Müllheim (CH)
(74) Vertreter: Kramer - Barske - Schmidtchen

(56) Entgegenhaltungen:
- EP-A- 0 722 515
- EP-A- 0 876 870
- US-B1- 6 447 666
- PATENT ABSTRACTS OF JAPAN Bd. 0071, Nr. 99 (M-240), 3. September 1983 (1983-09-03) -& JP 58 098643 A (NISSAN JIDOSHA KK), 11. Juni 1983 (1983-06-11)

## Beschreibung

Die vorliegende Erfindung bezieht sich auf eine Zylinderoberfläche, und insbesondere auf eine Zylinderoberfläche einer Hubkolbenmaschine wie einer Verbrennungskraftmaschine (z.B. ein Viertakt- oder Zweitakt- Motors) oder einer Hubkolbenpumpe.

Es ist bekannt, die Oberflächen von Zylinderbuchsen, d.h. Zylinderoberflächen, zur Erzielung einer bestimmten Oberflächenrauheit zu behandeln. Dieses geschieht zum Beispiel durch Verchromen oder durch Hohnen.

Im Betrieb einer Verbrennungskraftmaschine wie eines Viertaktmotors bewegt sich der Kolben in dem Zylinder zwischen einem oberen Totpunkt des Kolbens und einem unteren Totpunkt des Kolbens während der Arbeitstakte hin und her. Die Abdichtung des Verbrennungsraums oberhalb des Kolbens erfolgt durch sogenannte Kolbenringe, die sich gleitend entlang der Zylinderoberfläche bewegen. Um ein sogenanntes "Festfressen" des Kolbens zu verhindern, ist es notwendig, daß diese Gleitfläche zwischen den Kolbenringen und der Zylinderoberfläche mit einem Schmierstoff wie Öl benetzt ist, so daß sich ein sogenannter "Schmierfilm" bildet. Die Bildung eines solchen Schmierfilms wird unterstützt durch eine gewisse Rauheit der Zylinderoberfläche, die dafür sorgt, daß sich ein Ölreservoir in der Oberfläche bildet, aus dem der Schmierfilm gespeist werden kann.

Die DE 196 05 588 A1 offenbart ein Verfahren zum Bearbeiten einer Zylinderlaufbahn einer Brennkraftmaschine, bei dem die Zylinderoberfläche, ausgenommen in den Bereichen des oberen Totpunkts und des unteren Totpunkts, gehont wird, und in den Bereichen des oberen Totpunkts und des unteren Totpunkts eine Zylinderoberflächenstruktur mit Plateaus und Tälern durch Läppen erzeugt wird.

Die DE 42 38 525 C1 offenbart eine Zylinderlaufbüchse mit einer Verschleißschutzschicht, welche Verschleißschutzschicht nur im Kontaktbereich der Zylinderlaufbuchse mit dem obersten Kolbenring bei Stellung des Kolbens am oberen Totpunkt ausgebildet ist. Die Verschleißschutzschicht kann aus einer chromenthaltenden Schicht ausgebildet sein.

Die JP 52098643 offenbart das Vorsehen einer geringeren Oberflächenrauheit in der Nähe des oberen Totpunktes, gemäß dem Oberbegriff des Anspruchs 1.

Es ist eine Aufgabe der vorliegenden Erfindung, eine verbesserte Zylinderoberfläche der oben genannten Art anzugeben.

Diese Aufgabe wird gelöst durch eine Zylinderoberfläche nach Anspruch 1.

Weiterbildungen der Erfindung sind in den Unteransprüchen angegeben.

Durch das Ausbilden der glatten Schicht, die als Hartchromschicht bezeichnet wird, und der Topochromschicht, die bevorzugterweise die gleiche Härte wie die glatte Chromschicht aufweist, wird im Bereich der Topochromschicht eine allgemein rauhere Oberfläche erhalten. Diese rauhere Oberfläche weist in den Tälern zwischen den halbsphärischen Vorsprüngen Taschen oder Reservoirs für Schmiermittel auf. Die glattere Chromschicht sorgt für eine gute Abdichtung zwischen dem Hubkolben und der Zylinderwand in dem Bereich, in dem besonders hohe Drücke abzudichten sind. Die Kombination aus der Oberflächenstruktur der Topochromschicht und der relativ glatten Chromschicht sorgt einerseits für eine gute Abdichtung im Bereich hoher Drücke bei immer noch verhältnismäßig guter Schmierung und niedrigen Reibungswerten kombiniert mit einem reduzierten Traganteil im Bereich der Topochromschicht und damit einer weiter reduzierten Reibung und der Verbesserung der Schmierung durch die Schmiermittelreservoirs. Die Schmiermittelreservoirs, die an die relativ glatte Chromschicht anschließen, erlauben einen Transfer des Schmiermittels in diesem Bereich.

Weitere Merkmale und Zweckmäßigkeiten ergeben sich aus der Beschreibung eines Ausführungsbeispiels anhand der Figuren. Von den Figuren zeigen:
- Fig. 1: einen Querschnitt durch die Wand eines Zylinders bzw. einer Zylinderbüchse mit einer Zylinderoberfläche nach einer Ausführungsform der Erfindung, und
- Fig. 2: einen Querschnitt durch eine Zylinderbüchse nach einer weiteren Ausführungsform der Erfindung.

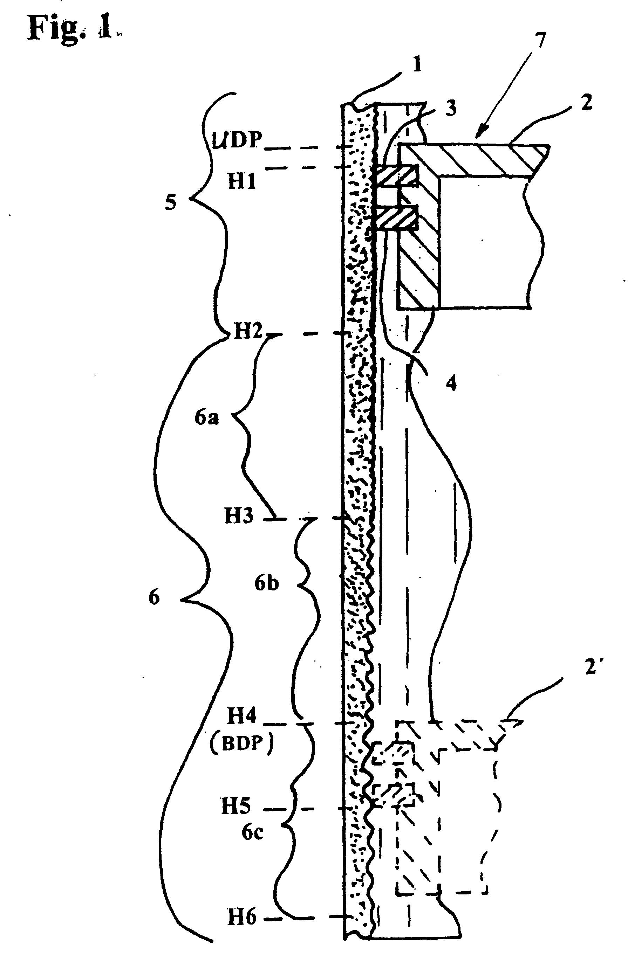

Unter Bezugnahme auf Fig. 1 wird eine Ausführungsform der Erfindung beschrieben.

Eine Chromschicht, wie sie mit dem Verfahren nach der EP 0 722 515 B 1 erhalten werden kann, wird im folgenden als Topochromschicht bezeichnet.

In Fig. 1 ist ein Teil einer Zylinderwand 1 einer Hubkolbenmaschine im Querschnitt gezeigt. Ein Teil eines Kolbens 2, der zwei Kolbenringe 3, 4 aufweist, ist an seinem oberen Totpunkt UDP im Querschnitt gezeigt. Der Kolben 2 bewegt sich zwischen seinem oberen Totpunkt UDP und seinem unteren Totpunkt BDP. In der Stellung am unteren Totpunkt BDP ist der Kolben gezeigt und mit 2' bezeichnet. Wenn sich der Kolben 2 am oberen Totpunkt UDP befindet, ist das Gas im Verbrennungsraum am stärksten verdichtet oder sogar bereits gezündet, so daß der Druck, der durch die Kolbenringe 3, 4 abgedichtet werden muß, am höchsten ist. Am unteren Totpunkt BDP ist der Druck demzufolge am niedrigsten. Der Druck, der durch die Kolbenringe 3, 4 abzudichten ist, nimmt während der Bewegung des Kolbens vom oberen Totpunkt UDP zum unteren Totpunkt BDP kontinuierlich ab (beim Arbeitshub). Beim Verdichtungshub und beim Ausstoßhub, d.h. bei der Bewegung vom unteren Totpunkt BDP zum oberen Totpunkt UDP nimmt der Druck kontinuierlich zu, wobei wiederum im Bereich des oberen Totpunktes der höchste Druck abzudichten ist.

Eine Rauheit der Zylinderoberfläche im Bereich des oberen Totpunktes, insbesondere im Bereich um die Höhe H1, die dem Bereich entspricht, der dem oberen Kolbenring 3 gegenüberliegt, wenn der Kolben 2 am oberen Totpunkt UDP ist, sollte daher gering sein, damit die Abdichtung gegenüber dem hohen Druck möglich ist. Falls die Oberflächenrauheit in diesem Bereich zu groß ist, können die Kolbenringe 3, 4 keine genügende Abdichtung zum Aufrechterhalten des Drucks im Raum 7 oberhalb des Kolbens 2 mehr liefern.

Darum weist die Zylinderoberfläche einen ersten Bereich 5 an ihrer dem Kolben zugewandten Innenseite auf, die eine erste Oberflächenrauheit Ra1 aufweist. Dieser erste Bereich 5 schließt wenigstens den Bereich ein, der dem obersten Kolbenring 3 des Kolbens 2 gegenüberliegt, wenn der Kolben 2 an seinem oberen Totpunkt UDP ist, und erstreckt sich entlang der Zylinderoberfläche in Richtung des unteren Totpunktes BDP über einen vorbestimmten Abstand. Dieser vorbestimmte Abstand wird später näher erläutert. An diesen ersten Bereich 5 anschließend erstreckt sich ein zweiter Bereich 6 in Richtung des unteren Totpunktes BDP und über diesen hinaus, der eine zweite Oberflächenrauheit Ra2 aufweist, die größer als Ra1 ist. Dieser zweite Bereich 6 erstreckt sich mindestens bis zu dem Bereich, der dem unteren Kolbenring 4 des Kolbens 2 gegenüberliegt, wenn der Kolben 2 an seinem unteren Totpunkt BDP positioniert ist, d.h. mindestens bis zu der Höhe H5 in Fig. 1.

Bei dem in Fig. 1 gezeigten Ausführungsbeispiel weist der Bereich 6 tatsächlich drei Unterbereiche auf, die sich in der Richtung vom oberen Totpunkt UDP in Richtung des unteren Totpunktes BDP und darüber hinaus aneinander anschließen und eine in dieser Richtung jeweils zunehmende Oberflächenrauheit aufweisen. D.h., ein erster Unterbereich 6a zwischen den Höhen H2 und H3 weist eine Oberflächenrauheit Ra2' auf, ein zweiter Unterbereich 6b weist eine Oberflächenrauheit Ra2" auf, die größer als Ra2' ist, und ein dritter Unterbereich 6c weist eine dritte Oberflächenrauheit Ra2"' auf, die größer als Ra2" ist.

Als Ergebnis wird sowohl die Schmierung verbessert als auch der sogenannte Traganteil verringert, d.h. der Anteil der Oberfläche des Zylinders, der überhaupt mit der Oberfläche des Kolbenrings in Kontakt treten kann.

Wenn man den Weg zwischen der oberen Kante des oberen Kolbenrings 3 des Kolbens 2 in der Stellung, in der der Kolben 2 an seinem oberen Totpunkt UDP ist, d.h. von der Höhe H1, bis zu der Höhe H5, d.h. der Position der unteren Kante des unteren Kolbenrings 4 des Kolbens 2 in der Stellung, in der der Kolben 2 an seinem unteren Totpunkt BDP ist, als den Gleitweg bezeichnet, dann enthält der erste Bereich 5 mindestens 5 % dieses Gleitwegs. Vorzugsweise deckt der erste Bereich 5 einen Anteil des Gleitwegs ab, der sich im Bereich zwischen 5 % und 80 % befindet. Der genaue Wert hängt von dem am oberen Totpunkt UDP abzudichtenden Druck und der Materialauswahl sowie der ersten Oberflächenrauheit ab. Die erste Oberflächenrauheit liegt im Bereich von Rz 1 - 20 µm (oder Ra 0,05 bis 1,6 µm). Der zweite Bereich enthält mindestens den verbleibenden Teil des Gleitweges. Die zweite Oberflächenrauheit liegt im Bereich von Rz 4 - 50 µm (oder Ra 0,3 bis 5 µm). Der Anteil des ersten Bereichs 5 am Gleitweg kann jedweden Wert und Zwischenbereich zwischen 5 % und 80 % haben, z.B. als den Wert 10 % oder 15 % oder 20 %, ... oder 40 %, oder 45 %, oder 50 %, ... oder 70 % oder 75 % oder 80 % oder die Bereiche 60 % - 80 % oder 40 % bis 70 % etc. Die erste Oberflächenrauheit liegt bevorzugterweise im Bereich von Rz von 1 - 10 µm oder von 1 - 5 µm oder von 1 - 4 µm oder von 1 - 3 µm oder von 2 - 3 µm. Die Oberflächenrauheit im zweiten Bereich kann jeden Zwischenwert und jeden Zwischenbereich der angegebenen Werte in ähnlicher Weise aufweisen. Z.B. sind bevorzugte Oberflächenrauheiten 4 µm oder 5 µm oder 6 µm oder ... oder 28 µm oder 29 µm oder ... 49 µm oder 50 µm, und Bereiche sind z.B. 5 - 7 µm oder 6 - 8 µm ...

Nach einer bevorzugten Ausführungsform ist der Übergang zwischen dem ersten und dem zweiten Bereich nicht abrupt sondern stetig, d.h. daß die Änderung der Oberflächenrauheit im Übergangsbereich stetig erfolgt. Eine durch den Übergang ggfs. erzeugte Stufe ist kleiner als 1/100 mm, bevorzugter kleiner als 1 µm, noch bevorzugter kleiner als 0,4 µm und am bevorzugtesten kleiner als 0,1 µm.

Nach einer weiteren bevorzugten Ausführungsform ändert sich die Oberflächenrauheit im ersten Bereich in der Richtung vom oberen Totpunkt UDP in Richtung zum unteren Totpunkt BDP kontinuierlich und ändert sich ebenfalls im zweiten Bereich 6 in Richtung des unteren Totpunkts BDP und darüber hinaus kontinuierlich, so daß die Oberflächenrauheit an den kontinuierlich abnehmenden Druck angepaßt wird.

Eine solche Zylinderoberfläche ist bevorzugter Weise aus einer Chromschicht ausgebildet, die durch ein elektrochemisches (galvanisches) Verfahren, wie es in der EP 0 722 515 B1 beschrieben ist, aufgebracht wird.

Der erste Bereich 5 kann dabei mit einer sogenannten Hartchromschicht versehen werden, die in der bekannten Art aufgebracht wird und die eine Oberflächenrauheit von Rz 1 - 20 µm (oder von ca. Ra 0,05 bis 1,6 µm) aufweist.

Der zweite Bereich wird mit der Oberflächenbeschichtung, wie sie mit dem Verfahren nach der EP 0 722 515 B1 erhalten wird, die als Topochromschicht bezeichnet wird, versehen. Eine solche Topochromschicht hat eine Oberflächenstruktur, die im wesentlichen aus aneinandergereihten und sich überlagernden Halbkugelformen besteht. Diese Halbkugelform reduziert den Traganteil, d.h. den Bereich der Zylinderoberfläche, die überhaupt in Kontakt mit den Kolbenringen treten kann auf Werte von z.B. 25 %. Außerdem ermöglichen die Zwischenräume zwischen den Halbkugeln die Bildung von Ölreservoirs zum Speisen des Schmierfilms.

Das gleichzeitige Aufbringen der relativ glatten Chromschicht (Hartchromschicht) im ersten Bereich 5 und der Topochromschicht im zweiten Bereich 6 wird zum Beispiel dadurch erzielt, daß bei dem aus der EP 0 722 515 B1 bekannten Verfahren eine Stabelektrode verwendet wird, die segmentiert ist, und an die die für die Ausbildung der unterschiedlichen Schichten notwendigen unterschiedlichen Spannungen/Ströme angelegt werden. Das ergibt automatisch auch den stetigen Übergang vom ersten zum zweiten Bereich. Die Segmente der Stabelektrode (Anode) sind elektrisch isoliert. Die Stabelektrode wird so im Zylinder oder einer Zylinderbüchse positioniert, daß die Zylinderachse und die Zentralachse der Stabelektrode dekkungsgleich sind. Insbesondere wird an ein erstes Segment die schrittweise geänderte elektrische Wellenform, wie sie in der EP 0 722 515 B1 beschrieben wird, zum Abscheiden bzw. Aufwachsen der Topochromschicht angelegt, und an ein benachbartes zweites Segment wird eine Spannung bzw. ein Strom zum Erzielen einer konstanten Stromdichte zum Abscheiden bzw. Aufwachsen der glatteren Chromschicht (Hartchromschicht) angelegt. Der Durchmesser des ersten Segmentes ist bevorzugterweise größer als der Durchmesser des zweiten Segmentes, damit eine Abscheidung der benachbarten Topochromschicht und Hartchromschicht derart, daß keine Stufe zwischen den beiden vorhanden ist, erzielt wird.

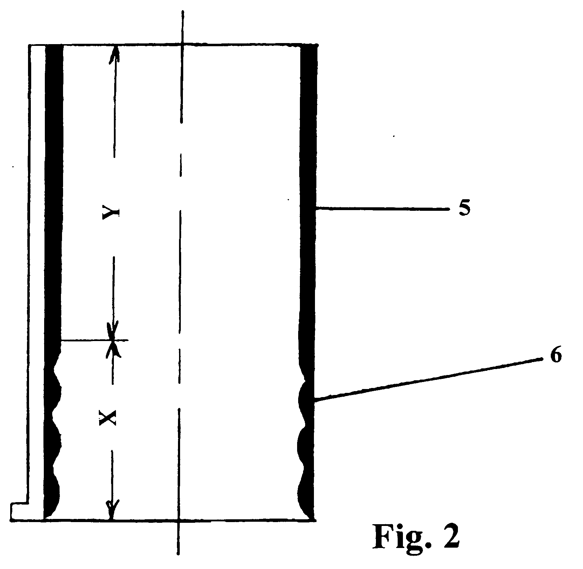

Fig. 2 zeigt eine Zylinderbüchse, bei der die Topochromschicht und die benachbarte glattere Chromschicht (Hartchromschicht) derart aufgebracht wurden. Die glattere Chromschicht 5 wurde unter Verwendung einer Anode (Elektrodensegment) von 20 - 30 mm Durchmesser und mit einer Stromdichte von 40 A/dm² abgeschieden und für das Abscheiden der Topochromschicht wurde eine Anode (Elektrodensegment) mit 30 - 40 mm Durchmesser und einer Stromdichte von 20 - 70 A/dm² bei dem schrittweisen Anlegen der Spannung bzw. des Stroms bei dem aus der EP 0 722 515 B 1 bekannten Verfahren verwendet.

Die Ausbildung einer kontinuierlich von dem oberen Totpunkt in Richtung des unteren Totpunktes zunehmenden Oberflächenrauheit ist in ähnlicher Weise, zum Beispiel durch Verwendung einer kegelförmigen Elektrode oder durch Verwendung einer vielfach segmentierten Elektrode möglich.

Die Schichtdicken der Chromschichten liegen im Bereich zwischen 10 und 100 µm für die Kegeloberflächen und vorzugsweise im Bereich von 20 bis 80 µm, und noch bevorzugter im Bereich von 40 bis 60 µm.

Die in Fig. 2 gezeigte Zylinderbüchse wurde für Vergleichsmessungen bei einem Turbodieselmotor verwendet. Bei dem Turbodieselmotor wurde ein Zylinderdurchmesser von 69 mm mit einem Hub von 62 mm verwendet. Das Grundmaterial der Zylinderbüchse war Kugelgraphitguß mit einer gehonten Oberfläche mit einer Rauhigkeit im Bereich von Rz von 3 - 4 µm.

Die Topochromschicht 6 wurde im Bereich X auf ca. 2/5 der Oberfläche mit einer Schichtdikke von 25 µm und einer Härte von 950 - 1050 HV und einer Rauhigkeit von 5 - 7 µm aufgebracht. Die glattere Chromschicht (Hartchromschicht) 5 hatte die gleiche Schichtdicke von 25 µm und dieselbe Härte von 950 - 1050 HV und eine Rauhigkeit von Rz von 2 - 3 µm.

Im Vergleich zu einem herkömmlichen Turbodieselmotor mit den gleichen Abmessungen, dem gleichen Maximaldruck von 132 bar, dem gleichen Hubraum von 223 cm³, dem selben Verdichtungsverhältnis von 1:22 und eine Zylinderbüchse aus Grauguß mit einer gehonten Oberfläche mit einer Oberflächenrauhigkeit von Rz 3 - 4 µm wurde eine Reduzierung des Kraftstoffverbrauchs von 3 - 5 % erzielt. Für die Kolbenringe, die bei dem erfindungsgemäßen Turbodieselmotor verwendet wurden, wurden Kolbenringe verwendet, bei dem der Kolbenringwerkstoff nicht mit Chrom beschichtet war, während bei dem Vergleichsmotor die Kolbenringe mit Chrom beschichtet waren.

Die Zylinderoberfläche der Erfindung ist besonders vorteilhaft mit Turbodieselmotoren zu verwenden, da diese vergleichsweise hohe Maximaldrücke im Bereich von 120 - 140 bar und darüber hinaus aufweisen. Aber auch mit Dieselmotoren, die Maximaldrücke im Bereich von 90 - 100 bar aufweisen und bei anderen Motoren, die z.B. Maximaldrücke im Bereich von 80 bar aufweisen, ist die erfindungsgemäße Zylinderfläche vorteilhaft zu verwenden.

Gerade im Zusammenhang mit hohen Maximaldrücken entfaltet die kombinatorische Wirkung aus der guten Abdichtbarkeit kombiniert mit der reduzierten Reibung und der Zufuhr von Schmiermitteln aus dem Topochrombereich mit der weiter reduzierten Reibung im Topochrombereich einen deutlich reduzierten Verbrauch, ohne daß andere Motorparameter geändert werden. Eine genaue theoretische Erklärung liegt noch nicht vor, aber die Meßergebnisse sprechen dafür, daß die Kombination aus der verbesserten Abdichtung im Bereich hoher Drücke und dem verringerten Traganteil kombiniert mit den Schmiermittelreservoirs zu einer Kombinationswirkung führen, die den Kraftstoffverbrauch stark reduzieren.

Besonders vorteilhaft läßt sich eine entsprechende Zylinderlauffläche mit der Weiterentwicklung des aus der EP 0 722 515 B1 bekannten Verfahrens zum gleichzeitigen Ausbilden der Topochromschicht und der relativ glatten Chromschicht herstellen.

Es wird ausdrücklich erklärt, daß alle Merkmale, die in der Beschreibung und/oder den Ansprüchen offenbart sind, zum Zwecke der ursprünglichen Offenbarung ebenso wie zum Zwecke des Beschränkens der beanspruchten Erfindung unabhängig von der Zusammenstellung der Merkmale in den Ausführungsformen und/oder den Ansprüchen getrennt und unabhängig voneinander offenbart sein sollen. Es wird ausdrücklich erklärt, daß alle Bereiche von Werten oder angegebene Gruppen von Gegenständen jeden möglichen Zwischenwert oder jeden möglichen Gegenstand aus der Gruppe zum Zwecke der ursprünglichen Offenbarung ebenso wie zum Zweck des Beschränkens der beanspruchten Erfindung, auch als Bereichsgrenze, offenbaren.

## Patentansprüche

1. Zylinderoberfläche eines Zylinders einer Hubkolbenmaschine, mit
einem ersten Oberflächenbereich (5), der eine erste Oberflächenrauheit (Ra1) aufweist, und einem zweiten Oberflächenbereich (6), der eine zweite Oberflächenrauheit (Ra2) aufweist, wobei der erste Oberflächenbereich wenigstens den Kontaktbereich (A1) zwischen dem Hubkolben (2) und der Zylinderoberfläche bei Stellung des Hubkolbens am oberen Totpunkt (UDP) des Hubkolbens (2) einschließt, sich der zweite Oberflächenbereich an den ersten Oberflächenbereich in Richtung des unteren Totpunktes (BDP) des Hubkolbens (2) anschließt, und die erste Oberflächenrauheit (Ra1) kleiner als die zweite Oberflächenrauheit (Ra2) ist, **dadurch gekennzeichnet, daß** der erste Oberflächenbereich (5) mit einer Hartchromschicht versehen ist, und der zweite Oberflächenbereich (6) mit einer Topochromschicht versehen ist.

2. Zylinderoberfläche nach Anspruch 1, **dadurch gekennzeichnet,**
**daß** die erste Oberflächenrauheit im Bereich von Rz 1- 20 µm liegt.

3. Zylinderoberfläche nach Anspruch 1 oder 2, **dadurch gekennzeichnet,**
**daß** die zweite Oberflächenrauheit im Bereich von Rz 4 - 50 µm liegt.

4. Zylinderoberfläche nach einem der Ansprüche 1 bis 3, **dadurch gekennzeichnet,**
**daß** die Oberflächenrauheit in dem zweiten Oberflächenbereich (6) in der Richtung von dem ersten Oberflächenbereich (5) weg, stufenweise und/oder kontinuierlich zunimmt.

5. Zylinderoberfläche nach einem der Ansprüche 1 bis 4, **dadurch gekennzeichnet,**
**daß** die Oberflächenrauheit in dem ersten Bereich stufenweise und/oder kontinuierlich in Richtung zu dem zweiten Oberflächenbereich (6) zunimmt.

6. Zylinderoberfläche nach einem der Ansprüche 1 bis 5, bei der
die Erstreckung des ersten Oberflächenbereichs (5) wenigstens 5 % der Gesamtlänge (H1 - H5) des Gleitweges von dem oberen Totpunkt (UDP) in Richtung des unteren Totpunktes (BDP) des Hubkolbens einnimmt.

7. Hubkolbenmaschine mit einer Zylinderoberfläche nach einem der Ansprüche 1 bis 6, bei der der Maximaldruck im Arbeitsraum des Zylinders größer 100 bar ist.

8. Verfahren zum Herstellen einer Zylinderoberfläche nach einem der Ansprüche 1 bis 6, mit den Schritten
- Anordnen einer stabförmigen Elektrode, die wenigstens zwei Segmente aufweist, die in Längsrichtung der Elektrode aufeinanderfolgend angeordnet und elektrisch voneinander isoliert sind, innerhalb einer Zylinderwand derart, daß die Längsachse der Elektrode und die Zylinderachse übereinstimmen,
- Einführen der Elektrode und der Zylinderwand in eine Flüssigkeit, die mindestens Chromionen enthält, und
- Anlegen eines im wesentlichen konstanten Stromes an ein erstes Segment der Stabelektrode und gleichzeitiges Anlegen eines sich schrittweise ändernden Stromes an ein zweites Segment, das dem ersten Segment benachbart ist, in der Weise, daß auf dem dem ersten Segment gegenüberliegenden Teil der Zylinderwand die Hartchromschicht (5) und auf dem dem zweiten Segment gegenüberliegenden Teil der Zylinderwand die Topochromschicht (6) ausgebildet werden.

## Claims

1. A cylinder surface of a cylinder of a reciprocating piston engine, comprising
a first surface region (5) having a first surface roughness (Ra1), and
a second surface region (6) having a second surface roughness (Ra2),
the first surface region comprising at least the contact region (A1) of the reciprocating piston (2) and the cylinder surface when the reciprocating piston is positioned at its top dead point (UDP), the second surface region being continuous to the first surface region in the direction of the bottom dead point (BDP) of the reciprocating piston (2), and the first surface roughness (Ra1) being smaller than the second surface roughness (Ra2), **characterized in that** the first surface region (5) is provided with a hard chromium layer and the second surface region (6) is provided with a topochromium layer.

2. The cylinder surface according to claim 1, **characterized in that**
the first surface roughness is in the range of Rz 1-20 µm.

3. The cylinders surface according to claim 1 or 2, **characterized in that**
the second surface roughness is in the range of Rz 4-50 µm.

4. The cylinder surface according to one of claims 1 to 3, **characterized in that**
the surface roughness in the second surface region (6) increases stepwise and/or continuously in the direction away from the first surface region (5).

5. The cylinder surface according to one of claims 1 to 4, **characterized in that**
the surface roughness in the first region increases stepwise and/or continuously in the direction towards the second surface region (6).

6. The cylinder surface according to one of claims 1 to 5, wherein
the extension of the first surface region (5) covers at least 5 % of the total length (H1-H5) of the sliding path from the top dead point (UDP) in the direction of the bottom dead point (BDP) of the reciprocating piston.

7. A reciprocating piston engine with a cylinder surface according to one of claims 1 to 6,
wherein the maximum pressure in the work space of the cylinder is higher than 100 bar.

8. A method for manufacturing a cylinder surface according to one of claims 1 to 6, comprising the steps of
- positioning a rod-shaped electrode comprising at least two segments arranged consecutively in the longitudinal direction of the electrode and being electrically insulated from each other, within a cylinder wall such that the longitudinal axis of the electrode and the cylinder axis coincide,
- inserting the electrode and the cylinder wall into a liquid including at least chromium ions, and
- applying an essentially constant current to a first segment of the rod-electrode and simultaneously applying a stepwise changing current to a second segment, which second segment is adjacent to the first segment, such that the hard chromium layer (5) is formed on the part of the cylinder wall opposite to the first segment and the topochromium layer (6) is formed on the part of the cylinder wall opposite to the second segment.

## Revendications

1. Surface de cylindre d'un cylindre d'un moteur à piston alternatif, comportant une première région de surface (5) qui présente une première rugosité de surface (Ra1), et une deuxième région de surface (6) qui présente une deuxième rugosité de surface (Ra2), la première région de surface entourant au moins la zone de contact (A1) entre le piston alternatif (2) et la surface de cylindre lorsque le piston alternatif se trouve au point mort haut (UDP) du piston alternatif (2), la deuxième région de surface se raccordant à la première région de surface en direction du point mort bas (BDP) du piston alternatif (2), et la première rugosité de surface (Ra1) étant inférieure à la deuxième rugosité de surface (Ra2), **caractérisée en ce que** la première région de surface (5) est pourvue d'une couche de chrome dur, et la deuxième région de surface (6) est pourvue d'une couche de topochrome.

2. Surface de cylindre selon la revendication 1, **caractérisée en ce que** la première rugosité de surface est située dans la plage de Rz 1 à 20 µm.

3. Surface de cylindre selon l'une ou l'autre des revendications 1 et 2, **caractérisée en ce que** la deuxième rugosité de surface est située dans la plage de Rz 4 à 50 µm.

4. Surface de cylindre selon l'une des revendications 1 à 3, **caractérisée en ce que** la rugosité de surface augmente, dans la deuxième région de surface (6) en direction opposée de la première région de surface (5), par étape et/ou de manière continue.

5. Surface de cylindre selon l'une des revendications 1 à 4, **caractérisée en ce que** la rugosité de surface augmente, dans la première région de surface (6) en direction de la deuxième région de surface (5), par étape et/ou de manière continue.

6. Surface de cylindre selon l'une des revendications 1 à 5, **caractérisée en ce que** l'extension de la première région de surface (5) occupe au moins 5 % de la longueur totale (H1 - H5) du trajet de glissement depuis le point mort haut (UDP) en direction du point mort bas (BDP) du piston alternatif.

7. Moteur à piston alternatif comportant une surface de cylindre selon l'une des revendications 1 à 6, dans laquelle la pression maximum dans la chambre de travail du cylindre est supérieure à 100 bar.

8. Procédé de fabrication d'une surface de cylindre selon l'une des revendications 1 à 6, présentant les étapes suivantes :
- agencement d'une électrode en forme de baguette qui présente au moins deux segments qui sont agencés successivement en direction longitudinale de l'électrode et isolés électriquement l'un par rapport à l'autre à l'intérieur d'une paroi de cylindre de telle sorte que l'axe longitudinal de l'électrode et l'axe de cylindre coïncident,
- introduction de l'électrode et de la paroi de cylindre dans un liquide qui contient au moins des ions de chrome, et
- application d'un courant sensiblement constant à un premier segment de l'électrode en baguette et application simultanée d'un courant qui varie progressivement à un deuxième segment qui est voisin du premier segment, de telle sorte que la couche de chrome dur (5) se forme sur la partie opposée au premier segment, de la paroi de cylindre, et la couche de topochrome (6) se forme sur la partie opposée au deuxième segment.
